# EUROPEAN PATENT SPECIFICATION

(11) **EP 0 525 143 B1**
(45) Date of publication and mention of the grant of the patent: **11.10.1995**
(21) Application number: 92903787.7
(22) Date of filing: 30.01.1992
(51) Int. Cl.: B60J 3/02

(54) **FIXING SPRING FOR HINGES OF SUN VISORS OF MOTOR VEHICLES**
HALTEFEDER FUER SCHARNIER EINER KRAFTFAHRZEUGSONNENBLENDE
RESSORT DE FIXATION POUR CHARNIERES DE PARE-SOLEIL DE VEHICULES AUTOMOBILES

(30) Priority: 15.02.1991 ES 9100402
(43) Date of publication of application: 03.02.1993
(73) Proprietor: FICO I.T.M., S.A., E-08027 Barcelona (ES)
(72) Inventor: AYMERICH MUNOZ, José, E-08191 Rubi (ES); PRAT CASTAN, Jesus, E-08191 Rubi (ES)
(74) Representative: Marx, Lothar, Dr.
(86) International application number: PCT/ES92/00012
(87) International publication number: WO 92/14624

(56) References cited:
- EP-A- 0 099 968
- DE-B- 2 551 633

## Description

### Field of the invention

The object of the present invention is a retaining spring for automobile sunvisor hinges which, particularly, is for holding the position occupied by the sunvisor among the possible positions which may be selected by the user.

### Background of the invention

It is well known that the sunvisor hinges normally fitted as a original equipment in automobiles comprise, in essence, a body member which may be defined by the frame of the sunvisor or be attached to said frame, which is attached to a retaining spring in such a way that said body member and retaining spring work together tightly to receive the pivot pin of the bent support attached to the automobile structure.

The above described unit allows the sunvisor to occupy any position among those which are regularly used. The position occupied by the sunvisor is held by the gripping action of the retaining spring on the pivot pin of the bent support, thereby preventing the vibration caused by the vehicle when being driven from causing untimely movement of the sunvisor.

Generally the retaining spring and the pivot pin of the bent support are provided with corresponding mechanical means, which usually consist of positioning flats formed on said spring and pivot pin, allowing the rest positions of the sunvisor to be held more firmly.

In this way, the sunvisor hinge retaining spring applies pressure in two well differentiated ways to the pivot pin of the bent support. On the one hand, there is a first type of pressure for the sunvisor positions other than the rest positions and, on the other hand, a second type of pressure for the sunvisor rest positions. Thus, the passage of the sunvisor from the rest positions to any other position and vice versa, which passage hereinafter with regard to the retaining spring will be called working cycle, subjects the retaining spring to repeated resilient deformation which causes fatigue of the component material thereof, generally steel. This fatigue of the material causes a loss of resilience in the retaining spring and consequently a slackening of the grip on the pivot pin of the bent support whereby, under these conditions, the position occupied by the sunvisor becomes unstable and the vibrations of the vehicle when being driven cause untimely movement of the sunvisor which, apart from being troublesome, may cause situations of danger.

As examples of known embodiments of retaining springs for automobile sunvisors, there may be cited Spanish utility model number ES-U-292644, equivalent to US patent 4778160, and Spanish patent number P 8900980 corresponding to GB-A-2 229 154 or to US-A-5,007,622, both having as title "Spring for automobile sunvisor hinges". In the first case, Spanish utility model number 292644, the retaining spring consists of a steel leaf, which, in essence, is formed as a quadrangular prism having rounded edges, one of the sides of which acts as a flexible wing pressing on the pivot pin of the bent support and, in the latter case, Spanish patent number P 8800980, the retaining spring consists of a steel sheet which, basically, is formed with four essentially rectangular tabs, one of which is extended with a curved extension defining a housing for the said pivot pin and which is gripped by said tabs and curved extension.

From EP-A-No. 0 099 968 A2 a sunvisor for automobiles is known comprising a reinforcement-insert having a retaining spring with an essentially quadrangular prismatic form with rounded edges which is embedded into a casing with its free ends, thereby forming a housing for accommodating the pivot-axis of the sunvisor.

As the free ends of the retaining spring of this prior art sunvisor are embedded rigidly in said casing, the forces, which are exerted on the spring structure upon pivotal movement of the sunvisor are of a complexe nature and tend to lessen the resilience of the spring. As the pivot-axis of sunvisors generally have two mutually opposite flat surfaces defining a fixed position of the sunvisor if two corresponding flat surfaces of the spring are placed thereon, a tension is exerted on the spring structure if the sunvisor is moved around its axis. The diameter of said axis increases if the flat sides of the spring leave the corresponding flats sides of the axis. Disadvantageously the load exerted on the spring is of complexe nature, including bending loads and tensile loads. As such sunvisors are frequently turned around their axes, the resilience of the spring material will decrease and after a certain number of operations the spring will fail to function properly.

Generally speaking, the known embodiments of sunvisor hinge springs suffer as main drawback the fact that the operative reliability is limited by a low number of working cycles after which they break or lose resilience and consequently slacken their grip on the pivot pin of the bent support, causing untimely release of the sunvisor.

### Summary of the invention

With a view to providing a new embodiment of sunvisor hinge spring which, based on an extension of the useful life of the spring by a larger capacity of absorption of the repeated resilient deformation to which it is subjected, should provide a solution to the problems derived from the low number of working cycles supported by the spring of the known embodiments, there is disclosed a new retaining spring for automobile sunvisor hinges.

The retaining spring for automobile sunvisor hinges according to the invention
a) is a one-piece member formed from a highly flexible material,
b) is formed with a body member having essentially quadrangular prismatic form with rounded edges, and
c) is symmetrical about its center plane,
(Retaining spring of the type disclosed in EP-A-0 099 968),
characterized in that
d) said body member is provided
   d1) on one of the sides thereof with a slot extending longitudinally and centrally coextensive therewith, and
   d2) on the two sides forming a dihedral with said side, with respective recesses arranged longitudinally and being coextensive with the body member and formed with respective flexible tabs having an essentially rectangular surface and converging awards said center plane, said resillent tabs internally defining corresponding positioning flats, and
   d3) with an essentially trapezoidal housing for grippingly receiving the pivot pin of a bent support attached to an automobile structure, with the remaining side of the body member and said sides forming a dihedral therewith defining a housing for snugly receiving the means setting the position occupied by the spring within the sunvisor.

The features of the automobile sunvisor hinge retaining spring of the invention described above provide a solution to the drawbacks derived from the limited capacity of absorption of the resilient deformation that the successive working cycles, i.e. the passage from the rest positions to any other position and vice versa, cause in the known embodiments of sunvisor hinge springs.

With the pivot pin of the bent support being inside the trapezoidal housing defined by the said resilient tabs, the features of the retaining spring of the invention allow the resilient deformation undergone by the spring during the working cycle to produce tensile-compression stress in the constituent material of the spring which is substantially lower than the stress to which the springs are subjected in the known embodiments in which said stresses fall basically on a small area and in particular on a single resilient leaf. As result of the foregoing, under the regular conditions of use, the retaining spring of the invention may be subjected to a large number of working cycles, which is very much higher than the number of cycles to which the springs of the known embodiments may be subjected, without breaking and without suffering from a noticeable loss of resilience.

### Brief description of the drawings

The retaining spring for automobile sunvisor hinges of the invention is illustrated in the sheet of drawings accompanying this specification. In the drawings:
Figure 1 is a front view of the spring of the invention.
Figure 2 is a cross-section view on the line II-II of Figure 1.
Figure 3 is a cross-section view showing the action of the spring of the invention on the pivot pin of the bent support when the sunvisor is in the rest position.
Figure 4 is a cross-section view showing the action of the spring of the invention on the said pivot pin when the sunvisor is in a position other than the rest position.

### Detailed description of the embodiment

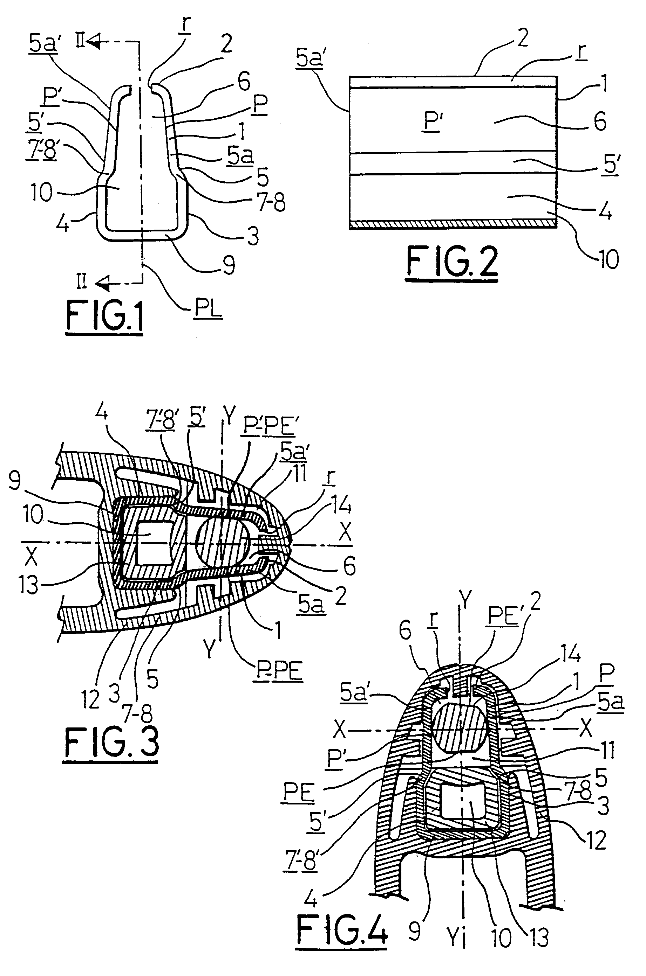

The retaining spring for automobile sunvisor hinges of the invention described as an embodiment comprises, as shown in Figures 1 and 2 of the sheet of drawings, a body member 1 which is a one-piece member and which is preferably formed from a metal sheet of uniform thickness and high resilience, particularly steel, having a quadrangular profile.

Figure 1 shows how the body member 1 is essentially quadrangularly prismatic with rounded side edges and is symmetrical about the longitudinal center plane PL which, in Figure 1, coincides with the section line referenced as II-II.

The side 2 of the body member 1, which relative to Figure 1 is the upper side, is provided with the longitudinal slot r which, as shown in Figures 1 and 2, is coextensive with the body member 1.

The sides 3 and 4 of the body member 1, which are the sides forming a dihedral with the said side 2, are provided respectively with the longitudinal recesses 5 and 5' which, as shown in Figures 1 and 2, are coextensive with the body member 1 and are formed with corresponding resilient tabs 5a and 5a' which, as shown in Figure 2, are essentially rectangular and define, inside the body member 1, respective positioning flats P and P'.

Figure 1 shows how the resilient tabs 5a and 5a' converge slightly towards the longitudinal center plane PL so that the resilient tabs 5a and 5a' and the side 2 of the body member 1 define an essentially trapezial housing 6, the short side of which consists of the side 2 formed with the slot r.

Figure 1 shows how the recess 5 forms on the side 3 of the body member 1 two adjacent curved longitudinal portions 7 and 8 which, internally and externally, define corresponding concave and convex surfaces connecting the resilient tab 5a with the lower portion of the side 3. In a similar way, the resilient tab 5a' is connected to the lower portion of the side 4 of the body member 1 by the curved portions 7' and 8'.

In the body member 1 the side 9, which is opposite to the side 2, and the sides 3 and 4 with which it forms a dihedral define the housing 10 which, as shown in Figure 1, is adjacent to the trapezial housing 6 defined by the resilient tabs 5a and 5a'.

Figures 3 and 4 show how in this embodiment the body member 1 forming the retaining spring of the invention is housed in the cavity 11 which is formed to this end in the frame 12 of the sunvisor which, for greater clarity of disclosure, has been shown in part in said Figures 3 and 4.

In order to set the position occupied by the body member 1 in the cavity 11, the frame 12 of the sunvisor is formed with the prismatic extension 13 which, as shown in Figures 3 and 4, is snugly located in the housing 10 defined by the sides 3, 4 and 9 of the body member 1. Once the body member 1 has been fitted to the frame 12 of the sunvisor, the cavity 11 and the prismatic extension 13 act in such a way that the resilient tabs 5a and 5a' may rotate to a relatively small extent around the recesses 5 and 5' respectively.

For similar reasons to those given above, the bent support has not been shown in full in the Figures of the drawing sheet, there being shown in Figures 3 and 4 the cross-section of the pivot pin 14 of the bent support and on which the sunvisor may rotate between the regular positions of use.

Figure 4 shows how the pivot pin 14 is formed with the positioning flats PE and PE' which, diametrically arranged, are slightly convergent. In this embodiment, said positioning flats PE and PE' define a single rest position for the sunvisor, although, as is known, the pivot pin 14 of the bent support may be formed with a larger number of positioning flats and consequently, define a larger number of rest positions for the sunvisor.

Figures 3 and 4 show how the body member 1 is housed in the cavity 11 of the frame 12 of the sunvisor and the pivot pin 14 of the bent support is disposed in the trapezoidal housing 6 defined by the resilient tabs 5a and 5a' of the body member 1, and under these conditions the retaining spring of the invention operates as follows:
- Figure 3 shows the rest position occupied by the sunvisor. In this position the positioning flats P and P' of the resilient tabs 5a and 5a' of the body member 1 press respectively on the positioning flats PE and PE' of the pivot pin 14 of the bent support, said pressure preventing untimely release of the sunvisor under normal conditions of use;
- Figure 4 shows a position occupied by the sunvisor other than the rest position. To attain this position, the user must apply two different and well differentiated moments of rotation to the sunvisor; the first moment to overcome the antagonist moment generated by the resilient tabs 5a and 5a', through the positioning flats P, P', when they press against the positioning flats PE and PE', respectively, of the bent support pivot pin 14, all as shown in Figure 3, and a second moment which is weaker than the first to overcome the friction generated by the pressure which said positioning flats P and P' of the resilient tabs 5a and 5a' exert on the curved surface of the pivot pin 14, said pressure in a similar way as happens when the sunvisor is in the rest position detailed in Figure 3, preventing untimely release of the sunvisor under normal conditions of use.

Figures 3 and 4 show the resilient deformation to which the body member 1 is subjected during the passage of the sunvisor from the rest position to any other different position and vice versa. The tensile-compression stress caused by said resilient deformation act basically on the adjacent curved portions 7 - 8 and 7' - 8' of the recesses 5 - 5', respectively, of the body member 1, which involves a substantially lower material fatigue than the known embodiments of retaining springs, and which leads to a larger number of working cycles without risk of breakage and without appreciable loss of resilience.

## Claims

1. A retaining spring for automobile sunvisor hinges which
a) is a one-piece member formed from a highly flexible material,
b) is formed with a body member (1) having essentially quadrangular prismatic form with rounded edges, and
c) is symmetrical about its center plane (PL),
characterized in that
d) said body member (1) is provided
d1) on one (2) of the sides thereof with a slot (r) extending longitudinally and centrally coextensive therewith, and
d2) on the two sides (3, 4) forming a dihedral with said side (2), with respective recesses (5, 5') arranged longitudinally and being coextensive with the body member (1) and formed with respective flexible tabs (5a, 5a') having an essentially rectangular surface and converging towards said center plane (PL), said resilient tabs (5a, 5a') internally defining corresponding positioning flats (P, P'), and
d3) with an essentially trapezoidal housing (6) for grippingly receiving the pivot pin (14) of a bent support attached to an automobile structure, with the remaining side (9) of the body member (1) and said sides (3, 4) forming a dihedral therewith defining a housing (10) for snugly receiving the means (13) setting the position occupied by the spring within the sunvisor.

## Patentansprüche

1. Haltefeder für Scharniere von Kraftfahrzeug-Sonnenblenden, welche
a) ein einteiliges Bauteil ist, das aus einem hochflexiblen Material ausgebildet ist,
b) aus einem Körperbauteil (1) mit im wesentlichen viereckiger prismatischer Form mit abgerundeten Kanten ausgebildet ist, und
c) symmetrisch um ihre Mittelfläche (PL) ist,
**dadurch gekennzeichnet**, daß
d) das Körperbauteil (1) versehen ist
d1) mit einem Schlitz (r) an einer (2) seiner Seiten, der sich längs erstreckt und zentral mit dieser gleich lang ist, und
d2) auf den beiden Seiten (3, 4), die mit dieser Seite (2) einen Dieder ausbilden, mit jeweiligen Aussparungen (5, 5'), die längs angeordnet und gleich lang wie das Körperbauteil (1) und mit jeweiligen flexiblen Streifen (5a, 5a') ausgebildet sind, die eine im wesentlichen rechteckige Oberfläche haben und in Richtung der Mittelfläche (PL) konvergieren, wobei die flexiblen Streifen (5a, 5a') innen entsprechende Positionierungsflächen (P, P') definieren, und
d3) mit einem im wesentlichen trapezförmigen Gehäuse (6), zum greifenden Aufnehmen des Gelenkzapfens (14) eines an einer Kraftfahrzeugstruktur befestigten gebogenen Trägers, wobei die verbleibende Seite (9) des Körperbauteils (1) und die Seiten (3, 4), die mit ihr einen Dieder ausbilden, ein Gehäuse (10) zur eng anliegenden Aufnahme der Einrichtungen (13) definieren, die die durch die Feder in der Sonnenblende eingenommene Position festlegen.

## Revendications

1. Ressort de maintien pour charnières de paresoleil d'automobiles qui
a) est un élément monobloc formé d'un matériau très flexible,
b) est formé d'un organe formant corps (1) ayant une forme sensiblement prismatique quadrangulaire avec des bords arrondis, et
c) est symétrique par rapport à son plan central (PL),
caractérisé en ce que
d) ledit élément formant corps (1) est pourvu
d1) sur l'un (2) des côtés de celui-ci, d'une fente (r) s'étendant longitudinalement et se trouvant dans le prolongement central de celui-ci, et
d2) sur les deux côtés (3, 4) formant un dièdre avec ledit côté (2), de cavités respectives (5, 5') disposées longitudinalement et se trouvant dans le prolongement de l'élément formant corps (1), et formées avec des pattes flexibles respectivement (5a, 5a') ayant une surface sensiblement rectangulaire, et convergeant vers ledit plan central (PL), lesdites pattes élastiques (5a, 5a') définissant intérieurement des méplats de positionnement (P, P') correspondants, et
d3) avec un logement sensiblement trapézoïdal (6) pour recevoir par serrage la tige de pivotement (14) d'un support plié fixé à la structure d'une automobile, avec le côté restant (9) de l'organe formant corps (1) et lesdits côtés (3, 4) formant un dièdre entre eux, définissant un logement (10) pour recevoir de façon bien ajustée les moyens (13) déterminant la position occupée par le ressort à l'intérieur du pare-soleil.
